# EUROPÄISCHE PATENTANMELDUNG

(11) **EP 0 563 674 A2**
(43) Veröffentlichungstag der Anmeldung: **06.10.1993**
(21) Anmeldenummer: 93104253.5
(22) Anmeldetag: 16.03.1993
(51) Int. Cl.: H04M 3/30

(54) **Prüfeinrichtung zum Prüfen von Leitungssignalen an analogen Teilnehmeranschlussleitungen**

(30) Priorität: 31.03.1992 DE 4210618
(71) Anmelder: SIEMENS AKTIENGESELLSCHAFT, D-80333 München (DE)
(72) Erfinder: Gnan, Günther, Dipl.-Ing., W-8038 Gröbenzell (DE); Kaiser, Wolfgang, Dipl.-Ing. (FH), W-8228 Freilassing (DE); Preiss, Frank, Dipl.-Phys., W-8080 Fürstenfeldbruck (DE); Schmutzler, Werner, W-8080 Fürstenfeldbruck (DE)

(57) **Zusammenfassung**

Prüfeinrichtungen zum Prüfen von Leitungssignalen an analogen Teilnehmeranschlußleitungen sollen insbesondere bezüglich der Erzeugung der Leitungssignale möglichst flexibel sein. Erfindungsgemäß wird die Erzeugung der Leitungssignale durch einen Mikrocomputer gesteuert, der Spannungsquellen über entsprechende Schaltmittel beliebig getaktet an die Teilnehmeranschlußleitung schalten kann.

## Beschreibung

Bei der Entstörung von Teilnehmeranschlüssen bzw. Teilnehmerendeinrichtungen werden in den Vermittlungsstellen Prüfeinrichtungen zur Lokalisierung der Fehlerstellen eingesetzt. Eine Aufgabe der Prüfeinrichtungen ist es, Leitungssignale außerhalb des Sprachbandes in Form von Leitungsimpulsen zur Teilnehmeranschlußleitung oder zur Teilnehmerschaltung zu senden oder von dort zu empfangen. Dabei haben die Leitungsimpulse unterschiedliche Amplituden und Frequenzen. Es werden Erd-, Spannungs-, Schleifen- oder Wechselspannungsimpulse gesendet bzw. empfangen.

Zum Senden und Empfangen von Leitungsimpulsen wurden bisher Schaltungen eingesetzt, deren Eigenschaften durch die dabei verwendeten Bauteile bestimmt waren. Konnte damit eine Prüfanforderung nicht erfüllt werden, so wurde eine Variante entwickelt.

Der Erfindung liegt das Problem zugrunde, eine gegenüber unterschiedlichen Prüfanforderungen flexible Prüfeinrichtung zum Prüfen von Leitungssignalen an analogen Teilnehmeranschlußleitungen anzugeben.

Dieses Problem wird durch die Merkmale des Anspruchs 1 gelöst.

Durch die Anschaltung und Taktung der Schaltmittel durch den Mikrocomputer ist es möglich, unterschiedlichste Leitungsimpulse zu erzeugen und auf diese Weise die unterschiedlichsten Prüfanforderungen zu erfüllen.

Eine Ausführungsform der Erfindung ist durch Anspruch 2 angegeben. Diese Ausführungsform besitzt insbesondere den Vorteil, daß auf einfache Weise verschiedenste Anschaltekonfigurationen der Prüfeinrichtung an die Teilnehmeranschlußleitung geschaltet werden können.

Eine weitere Ausführungsform der Erfindung gemäß Anspruch 3 beinhaltet insbesondere den Vorteil, daß mit Hilfe geeigneter Programme durch den Mikrocomputer eine Eigenprüfung der Meßschaltungen sowie ein Abgleich der Meßschaltungen softwaremäßig durchgeführt werden kann.

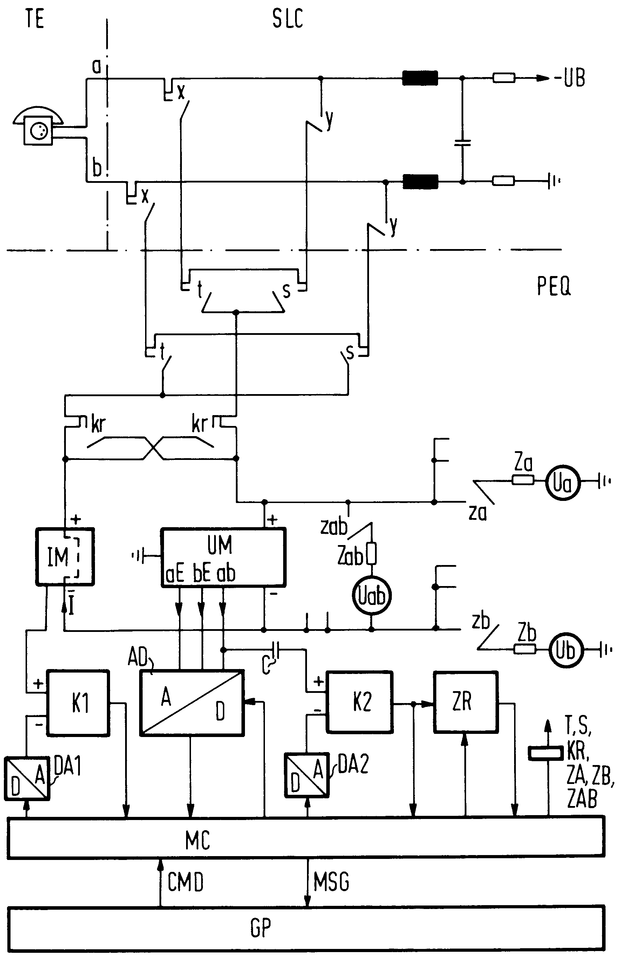

Im folgenden wird ein spezielles Ausführungsbeispiel der Erfindung anhand der Figur näher erläutert.

Die Figur zeigt ein Teilnehmerendgerät TE, eine vereinfacht dargestellte Teilnehmerschaltung SLC, sowie eine erfindungsgemäße Prüfeinrichtung PEQ zum Prüfen von Leitungssignalen an analogen Teilnehmeranschlußleitungen.

Die Darstellung der Teilnehmerschaltung umfaßt Speisewiderstände und Speisespannung - UB sowie eine Prüfkoppeleinrichtung, die durch die Koppelrelais X und Y repräsentiert ist. Über die Prüfkoppeleinrichtung werden während des Prüfens die Teilnehmeranschlußleitung und die Teilnehmerschaltung jeweils getrennt mit der Prüfeinrichtung verbunden.

Die erfindungsgemäße Prüfeinrichtung umfaßt Konfigurationsrelais T, S und KR, die von der Prüfsoftware des Vermittlungssystems in beliebiger Kombination geschaltet werden können. Das Konfigurationsrelais T schaltet die Teilnehmeranschlußleitung an die Prüfeinrichtung. Das Konfigurationsrelais S schaltet die Teilnehmerschaltung SLC an die Prüfeinrichtung. Das Konfigurationsrelais KR kreuzt die a- und die b-Ader der Teilnehmeranschlußleitung. Durch das Kreuzungsrelais KR können Meßschaltungen der Prüfeinrichtung von der b-Ader an die a-Ader des Prüflings geschaltet werden und umgekehrt.

Die Sendeschaltung der erfindungsgemäßen Prüfeinrichtung umfaßt Senderelais ZA, ZB und ZAB, die von der Prüfsoftware des Vermittlungssystems mit Hilfe der vorher genannten Konfigurationsrelais in beliebiger Kombination an die Teilnehmerleitung angeschaltet und getaktet werden können. Die Sendeschaltung wird durch einen Mikrocomputer MC gesteuert, der hierzu von der Prüfsoftware des Vermittlungssystems entsprechende Sendebefehle erhält. Die Prüfsoftware des Vermittlungssystems ist in einer übergeordneten Steuerung GP realisiert.

Zur Erzeugung der Leitungsimpulse umfaßt die Sendeschaltung des weiteren Spannungsquellen Ua, Ub, und Uab mit individuellen Innenwiderständen Za, Zb, und Zab, die über die Senderelaiskontakte za, zb und zab an die a-und b-Ader einer Teilnehmeranschlußleitung 15 entsprechend einem vorgegebenen Takt geschaltet werden.

Die Meßschaltung der erfindungsgemäßen Prüfeinrichtung umfaßt eine Strommeßschaltung IM, eine Spannungsmeßschaltung UM und eine Frequenzmeßschaltung, die den Speisestrom, die Spannung und die Frequenz an der Teilnehmeranschlußleitung messen und digitalen Auswerteschaltungen zuführen. Diese Auswerteschaltungen bewerten, gesteuert von dem Mikrocomputer MC den Zustand der Teilnehmeranschlußleitung oder des Teilnehmersatzes nach Spannung, Strom, Frequenz und Impulslängen. Zur Überwachung der Funktionstüchtigkeit der erfindungsgemäßen Prüfeinrichtung können Sendeschaltung und Meßschaltung in einem Eigenprüfmodus zusammengeschaltet werden.

Die Strommeßschaltung IM liefert an ihrem Ausgang eine dem Strom auf der Teilnehmeranschlußleitung proportionale Spannung, die dem positiven Eingang eines ersten Komparators K1 einer Auswerteschaltung zugeführt wird. Die Auswerteschaltung umfaßt des weiteren einen ersten Digital/Analog-Wandler DA1, der gesteuert vom Mikrocomputer MC eine Vergleichsspannung an den negativen Eingang des ersten Komparators K1 anlegt. Überschreitet die Spannung am positiven Eingang des ersten Komparators die Vergleichsspannung, so wechselt der erste Komparator am Ausgang seinen logischen Zustand.

Zu Beginn eines Stromimpulses oder einer Stromunterbrechung treten beim Betätigen des Senderelais Prellungen und Einschwingvorgänge auf, die den ersten Komparator mehrfach schalten lassen. Dies verfälscht die Meßergebnisse. Aus diesem Grund führt der Mikrocomputer MC eine geeignete Entprellung des logischen Ausgangssignals des ersten Komparators durch.

Die Schaltschwelle des ersten Komparators ist durch den ersten Digital/Analog-Wandler DA1 einstellbar, wodurch die Ströme unterschiedlicher Sendeschaltungen gemessen werden können.

Die Spannungsmeßschaltung UM mißt die Spannung zwischen a-Ader und Erde, b-Ader und Erde sowie zwischen a- und b-Ader. Mit den von der Spannungsmeßschaltung an deren Ausgängen aE, bE und ab gelieferten Meßwerten ermittelt der Mikrocomputer MC die Zustände der Indikatoren, die den vermittlungstechnischen Zustand der Prüfkonfiguration abbilden. Die Indikatoren liefern z.B. Informationen über Schleifenschluß, Erdschluß oder Spannungsschluß. Dabei werden vom Mikrocomputer die Schwankungen der Versorgungsspannung bei der Berechnung der Indikatorzustände berücksichtigt.

Der Mikrocomputer MC überwacht mit Hilfe der Meßwerte der Spannungsmeßschaltung des weiteren die Sendeschaltungen und trennt sie bei Überlast ab, um Beschädigungen zu vermeiden.

Die Frequenzmeßschaltung mißt die Frequenzen derjenigen Wechselspannungen, die vom Prüfling auf a- und b-Ader gesendet werden. Die Frequenzmeßschaltung umfaßt einen Kondensator C, einen zweiten Komparator K2 und einen Zähler ZR.

Die Spannungsmeßschaltung UM liefert am Ausgang ab die Spannung zwischen a- und b-Ader. Von dieser Spannung wird durch den Kondensator C der Wechselspannungsanteil ausgekoppelt und dem positiven Eingang des zweiten Komparators zugeführt. Ein zweiter Digital/Analog-Wandler DA2 legt, gesteuert vom Mikrocomputer MC eine Vergleichsspannung an den negativen Eingang des zweiten Komparators, die der Prüfgrenze für die Wechselspannungsamplitude entspricht. Der zweite Komparator bewertet dabei die positive und die negative Halbwelle der Wechselspannung mit der Prüfgrenze. Der logische Pegel am Ausgang des zweiten Komparators wird dem Zähler ZR und dem Mikrocomputer MC zugeführt.

Die Frequenz wird vom Mikrocomputer MC durch das Zählen von Impulsen innerhalb einer geeigneten Meßzeit ermittelt. Beim Messen von hohen Frequenzen werden Änderungen am Ausgang des zweiten Komparators als Zähltakt verwendet und die Meßzeit für den Lauf des Zählers wird vom Mikrocomputer vorgegeben. Beim Messen von tiefen Frequenzen liefert der Mikrocomputer den Zähltakt, und die Änderungen am Ausgang des zweiten Komparators werden als Meßzeit für den Lauf des Zählers verwendet.

Im folgenden wird die Funktionsweise des Mikrocomputers MC näher erläutert.
Der Mikrocomputer erhält von der Prüfsoftware des Vermittlungssystems Befehle CMD und steuert damit die Prüfeinrichtung. Die Befehlsliste umfaßt einen Konfigurationsbefehl, einen Impulssendebefehl, einen Indikatorwartebefehl, einen Frequenzmeßbefehl und einen Impulsmeßbefehl.

Der Konfigurationsbefehl stellt ein Soll-Abbild der Prüfeinrichtung dar. Durch ihn können die Relais in beliebiger Kombination aktiviert werden. Als Ergebnis auf den Befehl sendet der Mikrocomputer eine Kontrollnachricht MSG für die Prüfsoftware, die das Ist-Abbild aller Indikatoren der Prüfeinrichtung nach Einstellung der Konfiguration beinhaltet.

Mit dem Impulssendebefehl läßt sich jedes Relais takten. Dabei können die Impulsdauer, die Pausendauer und die Anzahl der Impulse frei gewählt werden. Als Impuls gilt der inverse Zustand des Relais, den es beim Eintreffen des Impulssendebefehls hatte. Damit können auf einfache Art z.B. Schleifenschlußimpulse und Schleifenunterbrechungsimpulse zur Prüfung der Teilnehmerschaltung erzeugt werden.

Mit dem Indikatorwartebefehl läßt sich das Eintreten eines bestimmten Zustandes eines bestimmten Indikators überwachen. Sobald der durch den Indikatorwartebefehl vorgegebene logische Zustand des Indikators hardwaremäßig eingetreten ist, sendet der Mikrocomputer MC eine entsprechende Indikatormeldung MSG an die Prüfsoftware.

Mit dem Frequenzmeßbefehl werden die Frequenzen der vom Prüfling auf a- und b-Ader gesendeten Wechselspannungen gemessen. Er hat einen Meßbereich für hohe Frequenzen und einen Meßbereich für tiefe Frequenzen.

Mit dem Impulsmeßbefehl wird das zeitliche Verhalten eines beliebig wählbaren Indikators gemessen. Dabei werden die Dauer der Impulse, der Pausen, der Ablaufzeit und die Anzahl der Impulse ermittelt. Als Meßergebnis wird die Dauer des ersten Impulses, der ersten Pause, die Ablaufzeit und die Anzahl der Impulse vom Mikrocomputer an Prüfsoftware gemeldet.

Während des Meßablaufs werden die einzelnen Größen mit Grenzwerten verglichen. Wird ein Grenzwert überschritten, so wird ein Fehlerflag gesetzt und anstelle des ersten Impulses oder der ersten Pause wird der fehlerhafte Wert eingetragen. Die Stelle des Fehlers innerhalb der Impulsserie wird statt der Impulsanzahl angegeben.

Beim Messen von Impulsserien, die durch den Ablauf eines Nummernschalters erzeugt werden, besteht die Möglichkeit Verhältnis und Frequenz der Impulse und Pausen zu bewerten und an die Prüfsoftware zu melden.

Eine Eigenprüfung der Prüfeinrichtung wird durch geeignete Konfigurations- und Meßbefehle realisiert, bei der der Sendeteil der Prüfeinrichtung mit dem zu prüfenden Empfangsteil der Prüfeinrichtung zusammengeschaltet wird.

Der Abgleich der Meßschaltung ist unterteilt in Offsetabgleich und Endwertabgleich. Der Offsetabgleich der Spannungsmeßschaltung UM und des Analog/Digital-Wandlers AD erfolgt durch Ablesen der Spannungswerte durch den Mikrocomputer im Ruhezustand der Schaltung. Die so ermittelten Offsetspannungswerte werden im Mikrocomputer von den späteren Meßwerten subtrahiert. Für den Endwertabgleich der Spannungsmeßschaltung und des Analog/Digital-Wandlers AD werden durch den Mikrocomputer bekannte Spannungswerte Ua, Ub an die Spannungsmeßschaltung UM geschaltet und gemessen. Aus den Meßwerten werden Korrekturfaktoren gebildet, die mit den späteren Meßwerten multipliziert werden.

Zur Ermittlung der Offsetwerte der Strommeßschaltung IM, des ersten Digital/Analog-Wandlers DA1 und des ersten Komparators K1 bzw. des zweiten Digital/Analog-Wandlers DA2 und des zweiten Komparators K2 steuert der Mikrocomputer im Ruhezustand der Schaltung die Digital/Analog-Wandler an den Umschaltepunkt der Komparatoren. Diese Einstellungen der Digital/Analog-Wandler werden zu den späteren Ausgabewerten der Digital/Analog-Wandler addiert.

## Patentansprüche

1. Prüfeinrichtung zum Prüfen von Leitungssignalen an analogen Teilnehmeranschlußleitungen mit folgenden Merkmalen:
a) Sendeschaltungen zum Senden von verschiedenen Leitungssignalen, wobei die Leitungssignale dadurch erzeugt werden, daß über Schaltmittel verschiedene Sendespannungen getaktet an die Teilnehmeranschlußleitung geschaltet werden,
b) Meßschaltungen zum Messen von verschiedenen Meßgrößen der Leitungssignale,
**gekennzeichnet durch**
c) einen Mikrocomputer (MC) zur Anschaltung und Taktung der genannten Schaltmittel und zum Auswerten der von den genannten Meßschaltungen gelieferten Meßergebnisse.

2. Prüfeinrichtung gemäß Anspruch 1,
**dadurch gekennzeichnet,** daß der genannte Mikrocomputer (MC)
a) durch Betätigung von Schaltmitteln aus einer ersten Gruppe von Schaltmitteln (T, S, kr) den verschiedenen Messungen entsprechende Anschaltekonfigurationen an die Teilnehmeranschlußleitung bildet,
b) durch Betätigung von Schaltmitteln aus einer zweiten Gruppe von Schaltmitteln (za, zb, zab) die Sendespannungen getaktet, an die Teilnehmeranschlußleitung schaltet.

3. Prüfeinrichtung gemäß Anspruch 1,
**gekennzeichnet durch**
Schaltmittel, durch die die Sendeschaltungen mit den Meßschaltungen zum Zwecke der Eigenprüfung verbunden werden können.
